# EUROPEAN PATENT APPLICATION

(11) **EP 2 722 748 A2**
(43) Date of publication of application: **23.04.2014**
(21) Application number: 13188848.9
(22) Date of filing: 16.10.2013
(51) Int. Cl.: G06F 3/0488

(54) **Method and apparatus for displaying data in terminal**

(30) Priority: 17.10.2012 KR 20120115288
(71) Applicant: Samsung Electronics Co., Ltd, Gyeonggi-do 443-742 (KR)
(72) Inventor: Lee, Cheong-Jae, 443-742 Gyeonggi-do (KR)
(74) Representative: Gover, Richard Paul

(57) **Abstract**

A data display method and apparatus of a terminal that displays predetermined data on a region of a size designated by a user are provided. The data display apparatus includes a display unit upon which a predetermined gesture occurs, and a controller configured to detect a region designated by the predetermined gesture as a screen display region when the predetermined gesture occurs, and to detect data selected by the predetermined gesture, and to control displaying of the data on the screen display region, wherein the controller simultaneously detects the region designated by the predetermined gesture and detects the data selected by the predetermined gesture.

## Description

### BACKGROUND OF THE INVENTION

### Field of the Invention:

The present invention relates to a data display method and apparatus of a terminal. More particularly, the present invention relates to a data display method and apparatus of a terminal that displays predetermined data on a region of a size designated by a user.

### Description of the Related Art:

A terminal may store a moving picture, a picture, or any other similar and/or suitable image, data and information which is captured or downloaded through a camera contained in the terminal, and the moving picture or the picture stored in the terminal may be played back or displayed through the terminal. However, the terminal may provide only a screen of a fixed size, such as a full screen or a screen of a predetermined size, and thus, a user may view the moving picture or the picture through the full screen or the screen of the predetermined size provided by the terminal.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a data display method and apparatus of a terminal that may display predetermined data in a region having a size designated by a user.

Another aspect of the present invention is to provide a data display method and apparatus of a terminal that may display data desired by a user in a region having a size desired by the user, at once through a predetermined gesture.

In accordance with another aspect of the present invention, a data display apparatus of a terminal is provided. The apparatus includes a display unit upon which a predetermined gesture occurs, and a controller configured to detect a region designated by the predetermined gesture as a screen display region when the predetermined gesture occurs, to detect data selected by the predetermined gesture, and to control displaying of the data in the screen display region, wherein the controller simultaneously detects the region designated by the predetermined gesture and detects the data selected by the predetermined gesture.

In accordance with another aspect of the present invention, a data display apparatus of a terminal is provided. The apparatus includes a display unit upon which a predetermined gesture occurs, and a controller configured to detect a screen display region designated by the predetermined gesture when the predetermined gesture occurs on a moving picture list, to detect a predetermined moving picture item selected by the predetermined gesture from the moving picture list, and to control play back, on the screen display region, of a moving picture corresponding to the predetermined moving picture item, wherein the controller simultaneously detects the screen display region designated by the predetermined gesture and detects the predetermined moving picture item selected by the predetermined gesture.

In accordance with another aspect of the present invention, a data displaying method is provided. The method includes simultaneously detecting, as a screen display region, a region designated by a predetermined gesture when the predetermined gesture occurs and detecting data selected by the predetermined gesture, and displaying the data in the screen display region.

In accordance with another aspect of the present invention, a data display method of a terminal is provided. The method includes simultaneously detecting a screen display region that is designated by a predetermined gesture when the predetermined gesture occurs in a moving picture list and detecting a predetermined moving picture item selected by the predetermined gesture from the moving picture list, and playing back, in the screen display region, a moving picture corresponding to the predetermined moving picture item.

According to exemplary embodiments of the present invention, a data display method and apparatus of a terminal are provided and thus, predetermined data may be displayed in a region of a size designated by a user. Also, desired data is displayed in a region having a desired size through a single predetermined gesture and thus, the method and apparatus may provide user's convenience and may be applied to various interfaces.

Other aspects, advantages, and salient features of the invention will become apparent to those skilled in the art from the following detailed description, which, taken in conjunction with the annexed drawings, discloses exemplary embodiments of the invention

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a diagram illustrating a configuration of a terminal according to exemplary embodiments of the present invention;
FIG. 2 is a flowchart illustrating a process of playing back a moving picture in a terminal according to a first exemplary embodiment of the present invention;
FIGs. 3A through 3F are diagrams illustrating the process of the first exemplary embodiment of the present invention;
FIG. 4 is a flowchart illustrating a process of executing an application in a terminal according to a second exemplary embodiment of the present invention;
FIGs. 5A through 5E are diagrams illustrating the process of the second exemplary embodiment of the present invention;
FIG. 6 is a flowchart illustrating a process of displaying a message in a terminal according to a third exemplary embodiment of the present invention; and
FIGs. 7A through 7E are diagrams illustrating the process of the third exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, description of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

A terminal, according to exemplary embodiments of the present invention, includes a portable terminal and a stationary terminal. Here, the portable terminal may be a portable electronic device which is mobile, including a video phone, a portable phone, a smart phone, International Mobile Telecommunication 2000 (IMT-2000) terminal, a Wideband Code Division Multiple Access (WCDMA) terminal, a Universal Mobile Telecommunication Service (UMTS) terminal, a Personal Digital Assistant (PDA), a Portable Multimedia Player (PMP), a Digital Multimedia Broadcasting (DMB) terminal, an E-Book, a portable computer such as a Notebook, a Tablet, and the like, a digital camera, or any other similar and or suitable mobile electronic device. The stationary terminal may include a desktop, a personal computer, and any suitable and/or similar stationary electronic device.

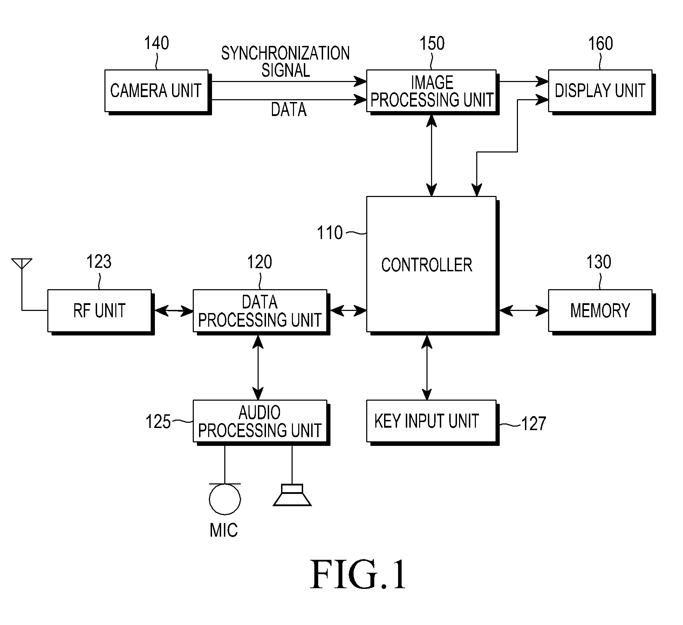

FIG. 1 is a diagram illustrating a configuration of a terminal according to an exemplary embodiment of the present invention.

Referring to FIG. 1, a Radio Frequency (RF) unit 123 performs a wireless communication function of the terminal. The RF unit 123 includes an RF transmitter (not shown) to up-convert and to amplify a frequency of a transmitted signal, an RF receiver (not shown) to low-noise amplify a received signal and to down-convert a frequency, and other similar and/or suitable elements for RF communications. A data processing unit 120 includes a transmitter (not shown) to encode and modulate the transmitted signal, a receiver (not shown) to demodulate and decode the received signal, and other similar and/or suitable elements for data processing. That is, the data processing unit 120 may include a Modulator/Demodulator (MODEM), a Coder/Decoder (CODEC) and other similar and/or suitable elements for data processing. Here, the codec is formed of a data codec (not shown) to process packet data and the like and an audio codec (not shown) to process an audio signal such as a voice signal and the like. An audio processing unit 125 plays back a received audio signal output from the audio codec of the data processing unit 120 or transmits a transmitted audio signal generated from a microphone MIC to the audio codec of the data processing unit 120.

A key input unit 27 may include keys used for inputting number and character information, function keys used for setting various functions, and any other similar and/or suitable keys for inputting information to a terminal. A memory 130 may include a program memory and a data memory. The program memory stores programs for controlling general operations of a terminal and programs for performing controlling so as to detect a screen display region designated by a predetermined gesture according to an exemplary embodiment of the present invention, and simultaneously, to detect data to be displayed on the screen display region by the predetermined gesture. Also, the data memory temporarily stores data generated while the programs are executed. However, the present invention is not limited thereto, and the memory 130 may be used to store any information that may be used and/or generated by the terminal.

Also, the memory 130 may store a start point where a predetermined gesture occurs and an end point where the predetermined gesture is released. In a case where the predetermined gesture corresponds to a touch and dragging, when a touch occurs for at least a predetermined time, and dragging is released after the dragging occurs in a predetermined direction while the touch is maintained, the memory 130 stores a point where the touch occurs during at least the predetermined time as the start point of the predetermined gesture and a point where the dragging is released as the end point of the predetermined gesture.

A controller 110 performs a function of controlling general operations of the terminal. When a predetermined gesture occurs on a display unit 160, the controller 110 detects a region designated by the predetermined gesture as a screen display region, and simultaneously, detects data selected by the predetermined gesture and controls the data to be displayed in the screen display region. Also, the controller 110 performs detection by changing a size of the screen display region based on the start point where the predetermined gesture starts and the end point where the predetermined gesture ends, and detects various quadrangular shapes associated with the screen display region. The controller 110 detects data located at the start point where the predetermined gesture starts as data to be displayed on the screen display region.

When the predetermined gesture corresponds to the touch and dragging, the controller 110 detects, as the start point, a point where a touch occurs for at least a predetermined time and then detects, as the end point, a point where dragging is released after the dragging occurs in a predetermined direction while the touch is maintained. The controller 110 detects, as the screen display region, a quadrangular region having a diagonal line connecting the start point and the end point. The predetermined direction of the dragging includes a diagonal direction from an upper side of the terminal to a lower side of the terminal, and a diagonal direction from the lower side to the upper side. Also, the controller 110 detects data located at the start point where the touch occurs for at least the predetermined time, as data to be displayed on the screen display region.

Also, in a case where the predetermined gesture includes a first gesture and a second gesture, when the first gesture occurs, the controller 110 displays a screen display region of a preset default size for displaying data selected by the first gesture. While the screen display region of the preset default size is displayed, the controller 110 adjusts the size of the screen display region of the preset default size according to a motion of the second gesture, and displays the data selected by the first gesture on the adjusted screen display region when the motion of the second gesture is released. In this case where the predetermined gesture includes a first gesture and a second gesture, the first gesture corresponds to a touch, and the second gesture corresponds to a touch and dragging. Also, when the predetermined gesture occurs, the controller 110 displays types of sizes of a screen display region for displaying data selected by the predetermined gesture, and displays the data selected by the predetermined gesture on a screen display region of a size selected from among the types of sizes of the screen display region.

In a case where a touch and dragging occurs as the predetermined gesture in a moving picture list, when the touch occurs on a predetermined moving picture item in the moving picture list for at least a predetermined time and dragging is released after the dragging occurs in a predetermined direction while the touch is maintained, the controller 110 detects a point where the touch is generated as a start point of the predetermined gesture and detects a point where the dragging is released as an end point of the predetermined gesture. The controller 110 detects a screen display region having a diagonal line connecting the start point and the end point, and performs controlling so as to play back, on the screen display region, a moving picture corresponding to the predetermined moving picture item where the touch occurs.

The controller 110 performs detection by changing a size of the screen display region for playing back a moving picture according to the start point and the end point. Also, when a touch occurs on a predetermined moving picture item in the moving picture list, the controller 110 displays a screen display region of a preset default size for playing back a moving picture. While the screen display region of the preset default size is displayed, and when the touch is maintained and dragging occurs in a predetermined direction, then the controller 110 adjusts the size of the screen display region of the preset default size so as to correspond to the direction of the dragging, and when the dragging is released, the controller 110 plays back, on the adjusted screen display region, a moving picture corresponding to the predetermined moving picture item selected by the touch. When a touch occurs on a predetermined moving picture item in the moving picture list, the controller 110 displays types of sizes of a screen display region for playing back a moving picture, and plays back a moving picture corresponding to the predetermined moving picture item selected by the touch on a screen display region of a size selected from among the types of sizes of the screen display region.

Also, in a case where the predetermined gesture is a touch and dragging that occurs while icons indicating applications are displayed, and when a touch occurs on a predetermined icon for at least a predetermined time, and dragging is released after the dragging occurs in a predetermined direction while the touch is maintained in a state where the icons indicating the applications are displayed, then the controller 110 detects a point where the touch occurs as a start point of the predetermined gesture and detects a point where the dragging is released as an end point of the predetermined gesture. The controller 110 detects a screen display region having a diagonal line connecting the start point and the end point, and performs controlling so as to execute, on the screen display region, an application corresponding to the predetermined icon where the touch occurs. The controller 110 performs detection by changing a size of the screen display region for executing the application according to the start point and the end point.

Also, in a case where the predetermined gesture occurs as a touch and dragging in an item list, when the touch occurs on a predetermined item in the item list for at least a predetermined time, and dragging is released after the dragging occurs in a predetermined direction while the touch is maintained, then the controller 110 detects a point where the touch occurs as a start point of the predetermined gesture and a point where the dragging is released as an end point of the predetermined gesture. The controller 110 detects a screen display region having a diagonal line connecting the start point and the end point, and performs controlling so as to display, on the screen display region, contents corresponding to the predetermined item where the touch occurs. The controller 110 performs detection by changing a size of the screen display region for displaying contents corresponding to the predetermined item, according to the start point and the end point. The item list may include a picture list, a contact information list, a recent record list, a message list, and any other similar and/or suitable list of selectable information.

A camera unit 140 captures image data, and includes a camera sensor to convert a captured optical signal into an electric signal and a signal processing unit to convert an analog image signal captured by the camera sensor into digital data. The camera sensor may be a Charge Coupled Device (CCD) or Complementary Metal Oxide Semiconductor (CMOS) sensor, may be embodied as a Digital Signal Processor and may be any other similar and/or suitable device for capturing image signal information. Also, the camera sensor and the signal processing unit may be embodied as an integrated unit, and may be embodied as separate units.

An image processing unit 150 performs Image Signal Processing (ISP) for displaying an image signal, which may be output from the camera unit 140, on the display unit 160, and the ISP may perform a gamma correction function, an interpolation function, a spatial change function, an image effect function, an image scale function, Automatic White Balance (AWB), Automatic Exposure (AE), Automatic Focus (AF), and any other similar and/or suitable functions. Accordingly, the image processing unit 150 processes an image signal output from the camera unit 140 according to a frame unit, and outputs the frame image data according to a feature and a size of the display unit 160. Also, the image processing unit 150 may include an image codec, and may perform a function of compressing the frame image data displayed on the display unit 160 according to a set scheme or a function of restoring the compressed frame image data into original frame image data. Here, the image codec may be a Joint Photographic Experts Group (JPEG) codec, a Motion Pictures Expert Group (MPEG) 4 codec, a Wavelet codec, and any other similar and/or suitable codec. Additionally, the image processing unit 150 may include an On Screen Display (OSD) function, and the image processing unit 150 may output on screen display data according to a screen size displayed based on controlling of the controller 110.

The display unit 160 displays an image signal output from the image processing unit 150 on a screen and displays user data output from the controller 110. The display unit 160 may be a Liquid Crystal Display (LCD), and in the present exemplary embodiment, the display unit 160 may include an LCD controller (not shown), a memory (not shown) for storing image data, an LCD display device (not shown), and other similar and/or suitable elements of the LCD. However, the present invention is not limited thereto, and the display unit 160 may be Light Emitting Diode (LED) display, and Organic LED (OLED) display, or Thin Film Transistor (TFT) display, or any other similar and/or suitable type of display unit. Here, when the LCD or any other similar and/or suitable display device is a touch screen device, the LCD may operate as an input unit. In this example, keys such as the key input unit 127, may be displayed on the display unit 160.

When the display unit 160 is the touch screen device and is used as a touch screen unit, the touch screen unit may be formed of a Touch Screen Panel (TSP) including a plurality of sensor panels, and the plurality of sensor panels may include a capacitive sensor panel that may recognize a hand touch and an electromagnetic inductive sensor panel that may recognize a detailed touch such as a touch pen. However the present invention is not limited thereto, and the TSP may include any similar and/or suitable type of sensors for detecting a touch gesture executed on the TSP. Also, a predetermined gesture for selecting data, and simultaneously, for displaying a screen display region of a size designated by a user, may occur on the display unit 160. Also, the display unit 160 displays the data selected by the predetermined gesture on the screen display region designated by the predetermined gesture.

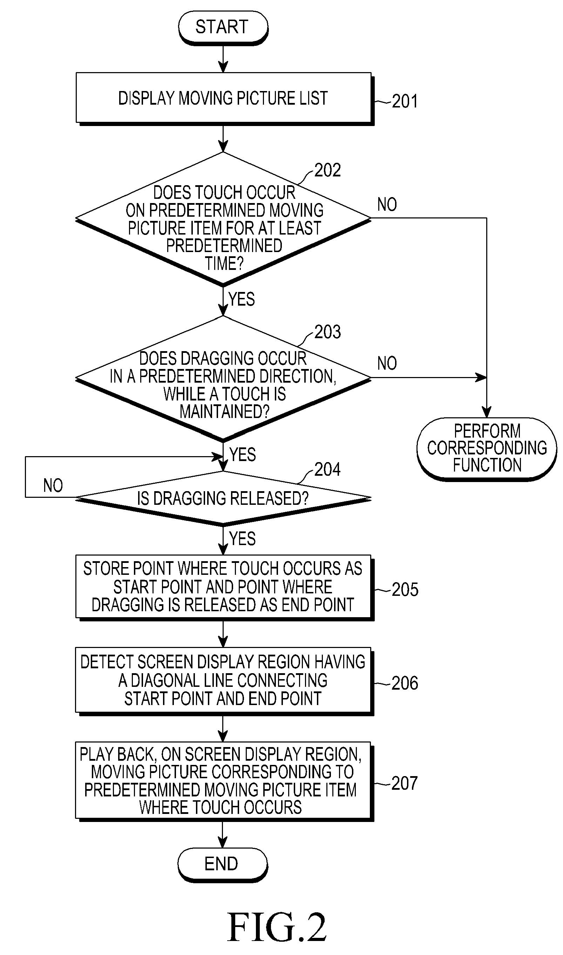

An operation of displaying data on a desired screen display region in a terminal will be described in detail with reference to FIGs. 2 through 7. Although exemplary embodiments of the present invention describe the predetermined gesture as a touch and dragging, the predetermined gesture may include any suitable and/or similar gestures that may form a variable screen display region, such as a touch, a double-touch, a multi-touch, and the like.

Also, according to an exemplary embodiment of the present invention, in order to display selected predetermined data on a screen display region having a size that varies according to a predetermined gesture generated by a user, the predetermined data may be resized and the resized data may be displayed on the screen display region. Additionally, in the present exemplary embodiment, the resizing operation performed with respect to the predetermined data is a publically known technology and thus, detailed descriptions thereof will be omitted.

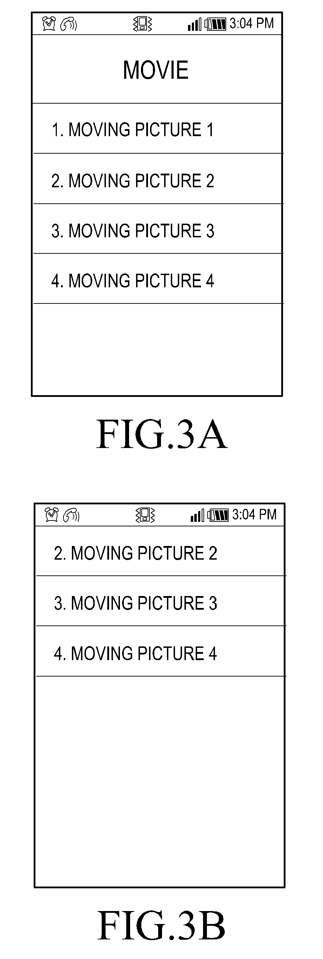

FIG. 2 is a flowchart illustrating a process of playing back a moving picture in a terminal according to a first exemplary embodiment of the present invention. FIGs. 3A through 3F are diagrams illustrating the process of the first exemplary embodiment of the present invention.

Referring to FIGs. 1 and 2, a moving picture list including at least one moving picture item is displayed in step 201. The at least one moving picture item included in the moving picture list may include at least one moving picture title, at least one moving picture thumbnail or at least one item of any suitable and/or similar type of information related to moving pictures.

In step 202, the controller 110 determines if a touch occurs on a predetermined moving picture item in the moving picture list for at least a predetermined time. If it is determined that the touch occurs for at least the predetermined time, in step 202, then, at step 203, the controller 110 determines if dragging occurs in a predetermined direction while the touch is maintained.

When the controller 110, in step 203, determines that the dragging occurs in the predetermined direction while the touch is maintained, the controller 110 senses the dragging in step 203, and proceeds to step 204 in order to determine if the dragging is released. When the controller 110 determines, in step 204, that the dragging is released, the controller 110 senses the release in step 204, and determines a detected point where the touch occurs in step 202 to be a start point and determines a detected point where the dragging is released in step 204 to be an end point, and then proceeds with step 205 for storing the start point and the end point in the memory 130.

After step 205, the controller 110 proceeds to step 206 in order to detect, as a screen display region designated by a user, a quadrangular region having a diagonal line connecting the start point and the end point. However, when a line connecting the start point and the end point is not a diagonal line, the controller 110 may not perform detection of the screen display region, and, instead, may perform another corresponding function. The diagonal line connecting the start point and the end point may be approximately diagonal or largely diagonal so as to be easily distinguished from a rectilinear line that is approximately orthogonal and/or parallel to a side of the terminal.

When the dragging occurs in the predetermined direction in step 203 and the predetermined direction of the dragging corresponds to a diagonal direction, then the controller 110 may proceed with steps 205 and 206 that detect the screen display region designated by the user. However, when the predetermined direction of the dragging in step 203 is not a diagonal direction, the controller 110 may not proceed with steps 205 and 206 that detect the screen display region designated by the user, and may perform another corresponding function.

When the screen display region designated by the touch and the dragging, which is a predetermined gesture generated by the user, is detected in step 206, the controller 110 then proceeds with step 207 in order to play back, on the screen display region, a moving picture corresponding to the predetermined moving picture item where the touch occurs in step 202. When a touch occurs on a predetermined moving picture item in the moving picture list for at least a predetermined time, the controller 110 displays a screen display region of a preset default size for playing back a moving picture as an On-Screen Display (OSD) screen. The screen display region of the preset default size may be provided as a screen display region of a fixed size or a screen display region of a different size based on a selected file item in a terminal.

When the dragging occurs in the predetermined direction while the touch is maintained, the controller 110 adjusts the size of the screen display region so as to correspond to the direction of the dragging. When the dragging is released, the controller 110 plays back, on the screen display region of the adjusted size, a moving picture corresponding to the predetermined moving picture item where the touch occurs. Also, when the touch is released while the screen display region of the preset default size is displayed as the OSD screen for playing back a moving picture, the controller 110 plays back, on the screen display region of the default size, the moving picture corresponding to the predetermined moving picture item where the touch occurs. That is, a screen display region of a default size is provided in order to play back a moving picture corresponding to a predetermined moving picture item that is touched by a touch motion or a touch gesture of a user, and subsequently, the screen display region of the default size is adjusted according to a screen display region of a size desired by the user as expressed by the user through a dragging motion of the user.

When a touch occurs on a predetermined moving picture item in the moving picture list for at least the predetermined time, the controller 110 displays types of sizes of a screen display region, for example, screen size ratios of 3:4, 16:9, or any other similar and/or suitable screen size ratio, for playing back a moving picture. When the predetermined size is selected from among the displayed sizes of the screen display region, the controller 110 plays back, on a screen display region of the selected predetermined size, a moving picture corresponding to the predetermined moving picture item where the touch occurs.

The types of sizes of the screen display region may include different types of sizes based on a selected moving picture item. Therefore, when a different moving picture item is selected, the controller 110 may extract size information that may be suitable and/or predetermined for play back of the selected moving picture item, and may display sizes of a screen display region including the extracted size information.

An operation of playing back a moving picture selected by the user on a screen display region of a size designated by the user, as illustrated in FIG. 2, will be described with reference to FIGs. 3A through 3F.

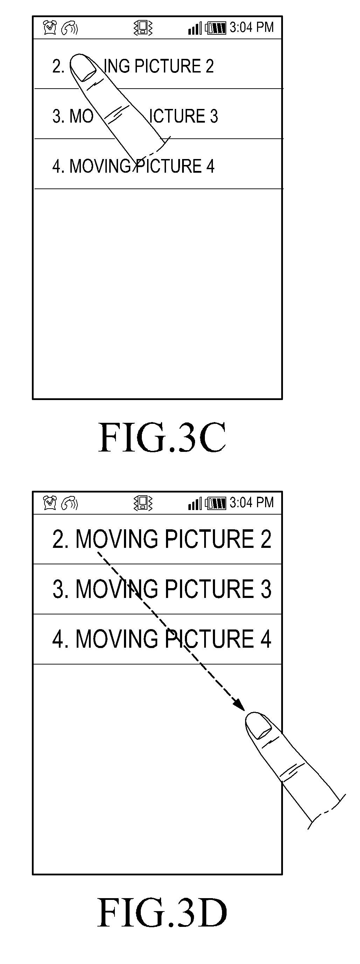

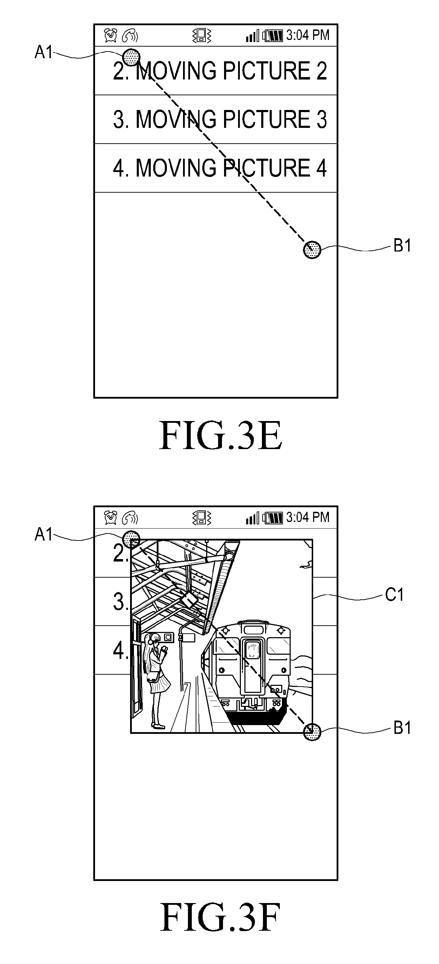

While a moving picture list is displayed, as illustrated in FIG. 3A, a "moving picture 2" item may be placed at an upper portion of a screen through a dragging motion, of the user, towards an upper direction, as illustrated in FIG. 3B. When a touch occurs on the "moving picture 2" item for at least a predetermined time, as illustrated in FIG. 3C, and dragging is released after the dragging occurs in a diagonal direction towards a lower side, as illustrated in FIG. 3D, a point where the touch occurs is determined to be a start point A1 and a point where the dragging is released is determined to be an end point B1, as illustrated in FIG. 3E. A quadrangular region, having a diagonal line connecting the start point A1 and the end point B1, is detected as a screen display region C1, as illustrated in FIG. 3F, and a moving picture corresponding to the "moving picture 2" is resized and played back on the screen display region C1.

The first exemplary embodiment describes that a moving picture selected by the user from among moving pictures stored in the terminal is played back on a screen display region of a size designated by the user. According to another exemplary embodiment, a moving picture may be played back on a screen display region of a desired size by touching an image indicating playback of a moving picture and performing a dragging motion in a diagonal direction, even in a page that allows selection of playback of a moving picture during searching on the Internet.

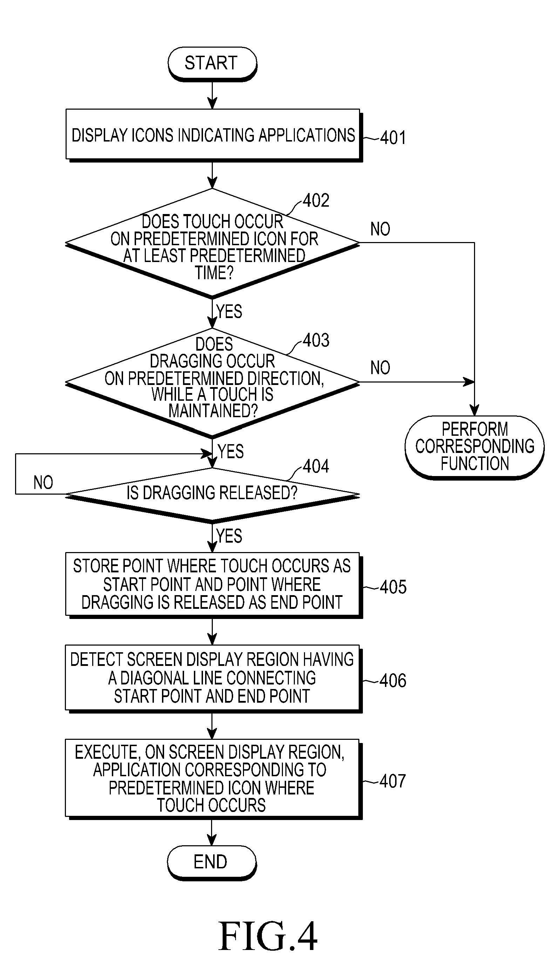

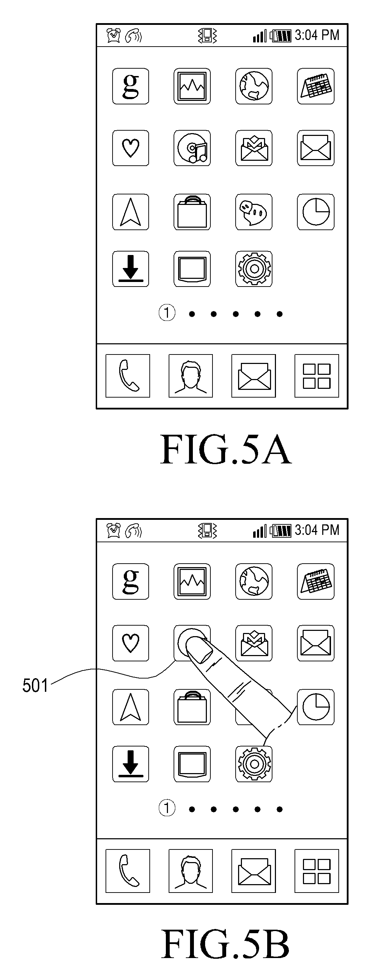

FIG. 4 is a flowchart illustrating a process of executing an application in a terminal according to a second exemplary embodiment of the present invention. FIGs. 5A through 5E are diagrams illustrating the process of the second exemplary embodiment of the present invention. Hereinafter, exemplary embodiments of the present invention will be described in detail with reference also to FIG. 1.

Referring to FIGs. 1 and 4, in step 401, icons indicating applications are displayed, and then, in step 402, the controller 110 determines whether a touch occurs on a predetermined icon for at least a predetermined time.

If, in step 402, the controller 110 determines that the touch occurs for at least the predetermined time, then the controller 110 determines whether dragging occurs in a predetermined direction while the touch is maintained. If the dragging occurs in the predetermined dragging, then the controller 110 senses the dragging in step 403. When the dragging is released, the controller 110 senses the release in step 404, and determines a point where the touch occurs in step 402 as a start point and determines a point where the dragging is released in step 404 as an end point. Then, the controller 110 proceeds to step 405 and stores the start point and the end point in the memory 130.

Next, the controller 110 proceeds with step 406 in order to detect, as a screen display region designated by a user, a quadrangular region having a diagonal line connecting the start point and the end point. However, when the line connecting the start point and the end point is not a diagonal line, the controller 110 may not perform detection of the screen display region and performs another corresponding function.

When the dragging occurs in the predetermined direction in step 403, and the predetermined direction of the dragging corresponds to a diagonal direction, then the controller 110 proceeds with steps 405 and 406 in order to detect the screen display region designated by the user. However, when the predetermined direction of the dragging is not in a diagonal direction, as determined in step 403, then the controller 110 may not perform steps 405 and 406 that detect the screen display region designated by the user, and, rather, may perform another corresponding function.

When the screen display region designated by the touch and the dragging, which is a predetermined gesture generated by the user, is detected in step 406, then the controller 110 proceeds with step 407 in order to execute, on the screen display region, an application, corresponding to the predetermined icon, at the location where the touch occurs in step 402.

When a touch occurs on a predetermined icon for at least a predetermined time, while the icons indicating the applications are displayed, then the controller 110 displays a screen display region as an OSD screen of a preset default size for executing an application corresponding to the predetermined icon on which the touch occurred. The screen display region that is an OSD screen of the preset default size is provided as a screen display region of a fixed size or a screen display region of a different size according to a type of the predetermined icon that is selected in a terminal.

When dragging occurs in a predetermined direction while the touch is maintained, the size of the screen display region is adjusted so as to correspond to the direction of the dragging. When the dragging is released, the controller 110 executes, on the screen display region having the adjusted size, an application corresponding to the icon where, or upon which, the touch occurs. When the touch is released while the screen display region of the preset default size for executing an application corresponding to an icon is displayed as an OSD screen, then the controller 110 executes, on the screen display region of the default size, the application corresponding to the icon where, or upon which, the touch occurs. That is, a screen display region of a default size is provided in order to execute an application corresponding to a predetermined icon touched according to a touch motion by the user, and subsequently, the screen display region of the default size is adjusted to be a screen display region of a size desired by the user through a dragging motion of the user.

When a touch occurs on a predetermined icon for at least a predetermined time while the icons indicating the applications are displayed, then the controller 110 displays types of sizes of a screen display region for executing an application corresponding to an icon, for example, sizes corresponding to screen ratios such as 3:4, 16:9, and the like. When a predetermined size is selected from among the displayed types of sizes of the screen display region, the controller 110 executes, on a screen display region of the selected size, an application corresponding to the predetermined icon where the touch occurs. The types of sizes of the screen display region may include different types of sizes based on a type of a selected icon, that is, a type of a corresponding application of the selected icon. Therefore, every time that a different icon is selected, the controller 110 extracts size information that may execute an application corresponding to the selected icon, and displays types of sizes of a screen display region including the extracted size information.

An operation of executing an application selected by the user in a screen display region of a size designated by the user, as illustrated in FIG. 4, will be described with reference to FIGs. 5A through 5E.

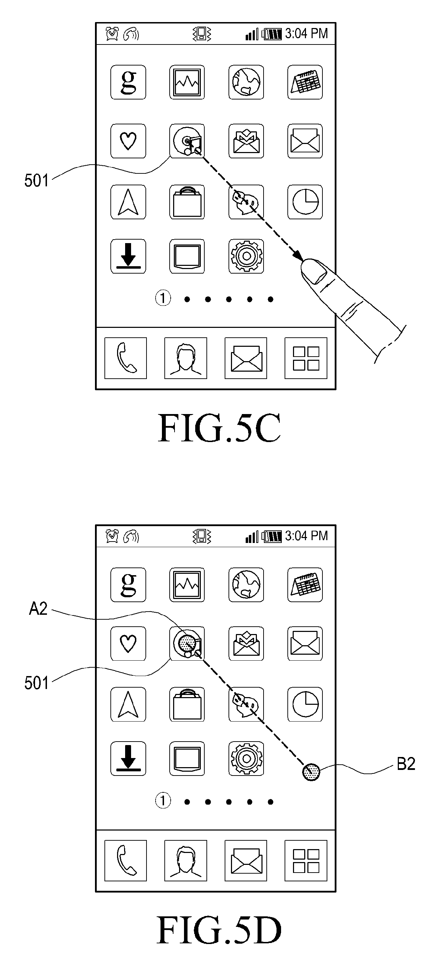

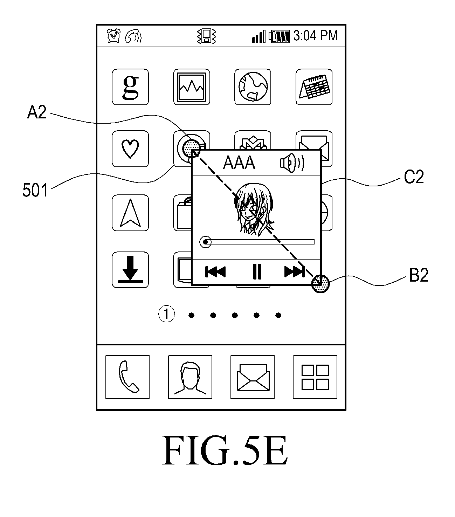

While a plurality of icons indicating a plurality of applications are displayed, as illustrated in FIG. 5A, and when a touch occurs on an icon 501 for at least a predetermined time, as illustrated in FIG. 5B, and dragging is released after the dragging occurs in a diagonal direction towards a lower side, as illustrated in FIG. 5C, a point where the touch occurs is determined to be a start point A2 and a point where the dragging is released is determined to be an end point B2, as illustrated in FIG. 5D. A quadrangular region having a diagonal line connecting the start point A2 and the end point B2 is detected as a screen display region C2, as illustrated in FIG. 5E, and a music application corresponding to the icon 501 is executed on the screen display region C2.

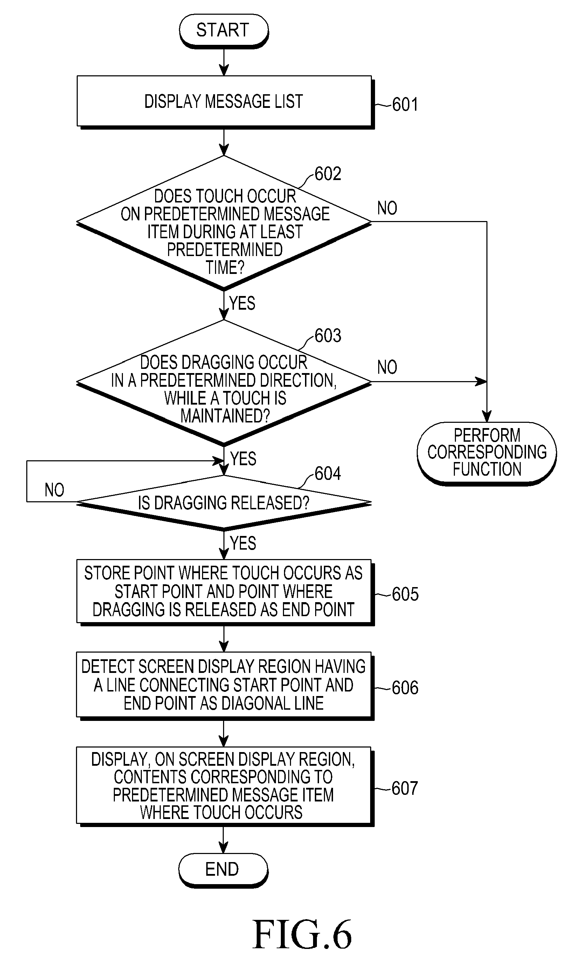

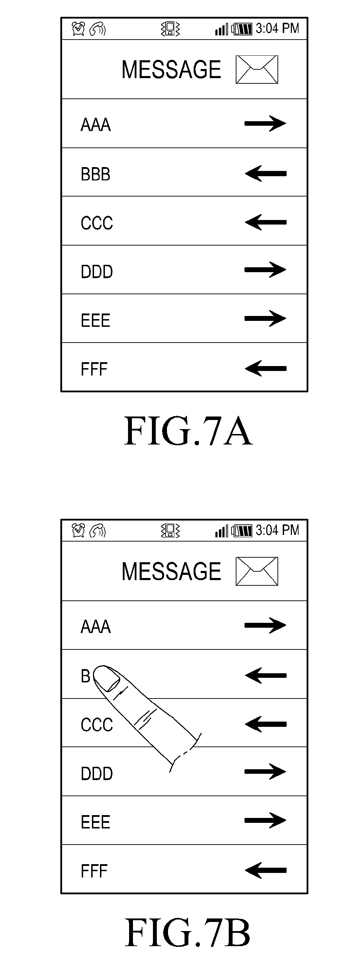

FIG. 6 is a flowchart illustrating a process of displaying a message in a terminal according to a third exemplary embodiment of the present invention. FIGs. 7A through 7E are diagrams illustrating the process of the third exemplary embodiment of the present invention. Hereinafter, exemplary embodiments of the present invention will be described in detail with reference also to FIG. 1.

Referring to FIG. 6, a message list displaying at least one message item is displayed in step 601. Next, in step 602, the controller 110 determines whether a touch occurs on a predetermined message item in the message list for at least a predetermined time. If the controller 110 determines that the touch occurs on the predetermined message item for at least the predetermined time, then the controller 110 proceeds to step 603 in order to determine if dragging occurs in a predetermined direction while the touch is maintained.

When the dragging occurs in the predetermined direction while the touch is maintained, the controller 110 senses the dragging in step 603, and when the dragging is released, the controller 110 senses the release in step 604, and then determines a point where the touch occurs in step 602 to be a start point and a point where the dragging is released to be an end point in step 604. Next, the controller 110 proceeds with step 605 for storing the start point and the end point in the memory 130. The controller 110 then proceeds with step 606 in order to detect, as a screen display region designated by the user, a quadrangular region having a diagonal line connecting the start point and the end point. However, when a line connecting the start point and the end point is different from a diagonal line, the controller 110 may not perform detection of the screen display region, and may perform another corresponding function.

When the dragging occurs in a predetermined direction in step 603 and the predetermined direction of the dragging corresponds to a diagonal direction, then the controller 110 may proceed with steps 605 and 606 in order to detect the screen display region designated by the user. However, when the predetermined direction of the dragging is different from a diagonal direction, as determined in step 603, then the controller 110 may not perform steps 605 and 606 that detect the screen display region designated by the user, and may perform another corresponding function. When the screen display region designated by the touch and the dragging, which is a predetermined gesture generated by the user, is detected in step 606, then the controller 110 proceeds with step 607 in order to execute, on the screen display region, an application corresponding to the predetermined icon at a location where the touch occurs in step 602.

When a touch occurs on a predetermined message item in the message list for at least a predetermined time, then the controller 110 displays a screen display region, as an OSD screen of a preset default size, for displaying contents corresponding to a message item. The screen display region of the preset default size is provided as a screen display region of a fixed size or a screen display region of a different size according to an amount of contents of a selected message item.

When dragging occurs in a predetermined direction while the touch is maintained, the size of the screen display region is adjusted so as to correspond to the direction of the dragging, and when the dragging is released, the controller 110 displays, on the screen display region having the adjusted size, contents corresponding to the predetermined message item where the touch occurs. When the touch is released while the screen display region of the preset default size is displayed as an OSD screen, then the controller 110 displays, on the screen display region of the preset default size, contents corresponding to the predetermined message item that is located where the touch occurs. That is, a screen display region of a default size is provided in order to display contents corresponding to a predetermined message item touched by a touch motion of the user, and subsequently, the screen display region of the default size is adjusted to a screen display region of a size desired by the user through a dragging motion of the user.

When a touch occurs on a predetermined message item in the message list for at least a predetermined time, the controller 110 displays types of sizes of a screen display region for displaying contents corresponding to the message item, for example, the sizes may be screen ratio sizes such as 3:4, 16:9, and the like. When a predetermined size is selected from among the displayed types of sizes of the screen display region, the controller 110 displays, on a screen display region of the selected size, contents corresponding to the predetermined message item that is located where the touch occurs. The types of sizes of the screen display region may include different types of sizes based on an amount of contents corresponding to a selected message item. Therefore, every time a different message item is selected, the controller 110 extracts size information that may display contents corresponding to the selected message item, and displays types of sizes of a screen display region including the extracted size information.

An operation of displaying a predetermined message item selected by the user, as illustrated in FIG. 6, on a screen display region of a size designated by the user will be described with reference to FIGs. 7A through 7E.

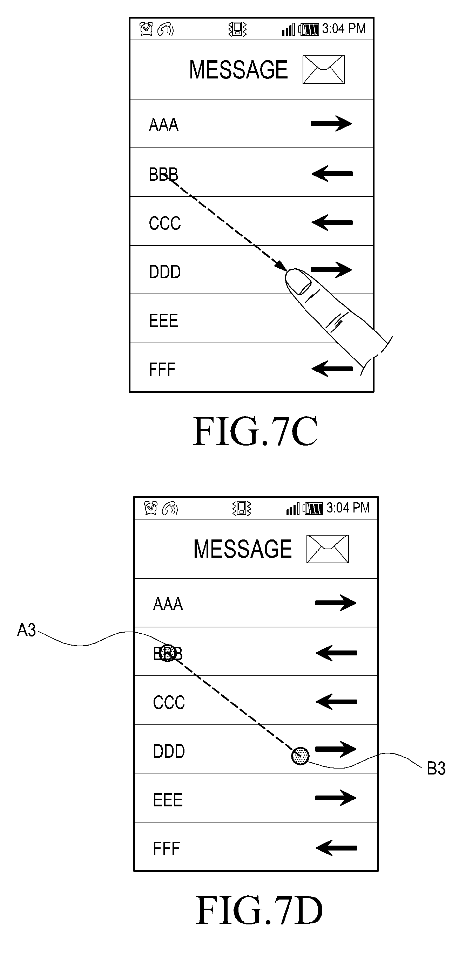

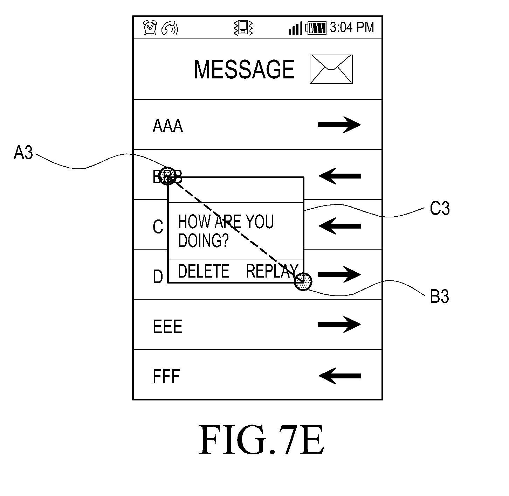

A message list including a plurality of message items is displayed, as illustrated in FIG. 7A, and when a touch occurs on a "BBB" message item for at least a predetermined time, as illustrated in FIG. 7B, and dragging is released after the dragging occurs in a diagonal direction towards a lower side, as illustrated in FIG. 7C, a point where the touch occurs is determined to be a start point A3 and a point where the dragging is released is determined to be an end point B3, as illustrated in FIG. 7D. A quadrangular region having a diagonal line connecting the start point A3 and the end point B3 is detected as a screen display region C3, as illustrated in FIG. 7E, and contents corresponding to the "BBB" message item are displayed in the screen display region C3.

Although FIGs. 7A through 7E describe displaying contents corresponding to a message item selected by the user on a screen display region of a size designated by the user while a message list is displayed, such operations of displaying contents may also be applied to displaying a contact information list, a picture list, a recent history list, and any other similar and/or suitable type of information list, in addition to the message list.

The data display method and apparatus of a terminal according to exemplary embodiments of the present invention may be embodied by a computer readable recoding medium and a computer readable code. The computer readable recoding medium may include all types of recording devices that store data that can be read by a computer system and may be a non-volatile computer readable recording medium. Examples of the computer readable recoding medium include a Read Only Memory (ROM), a Random Access Memory (RAM), an optical disc, a magnetic tape, a floppy disk, a hard disk, a non-volatile memory, and the like, and includes a computer-readable recoding medium embodied in a form of a carrier wave (for example, transmission through the Internet). The computer readable recording medium may also store, in a dispersed manner, a computer readable code in a computer system connected over a network based on a dispersive scheme, and execute the stored computer readable code.

While the invention has been shown and described with reference to certain exemplary embodiments thereof, it will be understood by those skilled in the art that various changes in form and details may be made therein without departing from the spirit and scope of the present invention as defined by the appended claims and their equivalents.

## Claims

1. A data display apparatus of a terminal, the apparatus comprising:
a display unit upon which a predetermined gesture occurs; and
a controller configured to detect a region designated by the predetermined gesture as a screen display region when the predetermined gesture occurs, to detect data selected by the predetermined gesture, and to control displaying of the data in the screen display region,
wherein the controller simultaneously detects the region designated by the predetermined gesture and detects the data selected by the predetermined gesture.

2. The apparatus of claim 1, wherein the controller is configured to detect the region designated by the predetermined gesture by changing a size of the screen display region according to a start point and an end point of the predetermined gesture,
wherein the controller is configured to determine that data located at a start point of the predetermined gesture as data to be displayed on the screen display region.

3. The apparatus of claim 1, wherein, when the predetermined gesture corresponds to a touch or dragging performed by a user of the terminal, the controller is configured to:
determine a start point to be a point where the touch occurs for at least a predetermined time, and determine an end point to be a point where the dragging is released after the dragging occurs in a predetermined direction while the touch is maintained; and
determine a quadrangular region having a diagonal line connecting the start point and the end point to be the screen display region,
wherein the controller is configured to determine that data located at the start point where the touch occurs for at least the predetermined time to be data to be displayed on the screen display region.

4. The apparatus of claim 1, wherein, when the predetermined gesture includes a first gesture and a second gesture performed by a user of the terminal, the controller is configured to:
control to display a screen display region of a preset default size, the screen display region being for displaying data selected by the first gesture when the first gesture occurs;
control to adjust the size of the screen display region of the preset default size according to a motion of the second gesture; and
control to display the data selected by the first gesture on the adjusted screen display region when the motion of the second gesture is released.

5. The apparatus of claim 1, wherein the controller is configured to:
display different sizes of a screen display region for displaying the data selected by the predetermined gesture when the predetermined gesture occurs; and
display the data selected by the predetermined gesture on a screen display region of a size selected from among the different sizes of the display screen region.

6. The apparatus of claim 1, wherein, when a touch occurs on a predetermined moving picture item in a moving picture list for at least a predetermined time, and dragging is released after the dragging occurs in a predetermined direction while the touch is maintained, the controller is configured to:
determine a point where the touch occurs to be a start point;
determine a point where the dragging is released to be an end point;
determine a screen display region having a diagonal line connecting the start point and the end point; and
control so as to play back, in the screen display region, a moving picture corresponding to the predetermined moving picture item where the touch occurs.

7. The apparatus of claim 1, wherein, when a touch occurs on a predetermined icon for at least a predetermined time while icons indicating applications are displayed, and dragging is released after the dragging occurs in a predetermined direction while the touch is maintained, the controller is configured to:
determine a point where the touch occurs to be a start point;
determine a point where the dragging is released to be an end point;
determine a screen display region having a diagonal line connecting the start point and the end point; and
control so as to execute, on the screen display region, an application corresponding to the predetermined icon that is disposed where the touch occurs.

8. The apparatus of claim 1, wherein, when a touch occurs on a predetermined item in an item list for at least a predetermined time, and dragging is released after the dragging occurs in a predetermined direction while the touch is maintained, the controller is configured to:
determine a point where the touch occurs to be a start point;
determine a point where the dragging is released to be an end point;
determine a screen display region having a diagonal line connecting the start point and the end point; and
control so as to display, on the screen display region, contents corresponding to the predetermined item that is disposed where the touch occurs.

9. A data displaying method, the method comprising:
simultaneously detecting, as a screen display region, a region designated by a predetermined gesture when the predetermined gesture occurs and detecting data selected by the predetermined gesture; and
displaying the data in the screen display region.

10. The method of claim 9, wherein detecting is performed by changing a size of the screen display region based on a start point and an end point of the predetermined gesture,
wherein data located at a start point of the predetermined gesture is determined to be data to be displayed on the screen display region.

11. The method of claim 9, wherein, when the predetermined gesture corresponds to a touch and dragging, the detecting comprises:
determining a start point to be a point where a touch occurs for at least a predetermined time, and determining an end point to be a point where dragging is released after the dragging occurs in a predetermined direction while the touch is maintained;
detecting a quadrangular region having a diagonal line connecting the start point and the end point; and
determining data located at the start point where the touch occurs for at least the predetermined time to be data to be displayed on the screen display region.

12. The method of claim 9, wherein, when the predetermined gesture includes a first gesture and a second gesture performed by a user of the terminal, the simultaneously detecting, as the screen display region, the region designated by the predetermined gesture when the predetermined gesture occurs and detecting data selected by the predetermined gesture comprises:
displaying a screen display region of a preset default size, the screen display region being for displaying data selected by the first gesture when the first gesture occurs;
adjusting the size of the screen display region of the preset default size according to a motion of the second gesture when the second gesture occurs while the screen display region of the preset default size is displayed; and
determining the adjusted screen display region to be for displaying data selected by the first gesture when the motion of the second gesture is released.

13. The method of claim 9, wherein the simultaneously detecting, as the screen display region, of the region designated by the predetermined gesture when the predetermined gesture occurs and the detecting of the data selected by the predetermined gesture comprises:
displaying different sizes of a screen display region for displaying data selected by the predetermined gesture when the predetermined gesture occurs; and
determining a screen display region of a selected size to be a screen display region for displaying the data selected by the predetermined gesture when a predetermined size is selected from among the different sizes of the screen display region.

14. The method of claim 9, wherein, when the predetermined gesture occurs as a touch or dragging in a moving picture list, the method further comprises:
determining a start point to be a point where a touch occurs and determining an end point to be a point where dragging is released when the touch occurs at a predetermined moving picture item in the moving picture list for at least a predetermined time, and dragging is released after the dragging occurs in a predetermined direction while the touch is maintained;
determining a screen display region having a diagonal line connecting the start point and the end point; and
playing back, on the screen display region, a moving picture corresponding to the predetermined moving picture item that is disposed where the touch occurs.

15. The method of claim 9, wherein, when the predetermined gesture occurs as a touch and dragging while icons indicating applications are displayed, the method further comprises:
determining a start point to be a point where a touch occurs and determining an end point to be a point where dragging is released when the touch occurs on a predetermined icon for at least a predetermined time, and dragging is released after the dragging occurs in a predetermined direction while the touch is maintained, in a state where the icons indicating the applications are displayed;
determining a screen display region having a diagonal line connecting the start point and the end point; and
executing, on the screen display region, an application corresponding to the predetermined icon that is disposed where the touch occurs.

16. The method of claim 9, wherein, when the predetermined gesture occurs as a touch and dragging on an item list, the method further comprises:
determining a start point to be a point where a touch occurs and determining an end point to be a point where dragging is released when the touch occurs on a predetermined item in the item list for at least a predetermined time and dragging is released after the dragging occurs in a predetermined direction when the touch is maintained;
determining a screen display region having a diagonal line connecting the start point and the end point; and
displaying, on the screen display region, contents corresponding to the predetermined item that is disposed where the touch occurs.
